# EUROPEAN PATENT SPECIFICATION

(11) **EP 2 288 868 B1**
(45) Date of publication and mention of the grant of the patent: **08.10.2014**
(21) Application number: 09747547.9
(22) Date of filing: 14.05.2009
(51) Int. Cl.: G01B 11/25, G01B 17/00

(54) **VISION SYSTEM AND METHOD FOR MAPPING OF ULTRASONIC DATA INTO CAD SPACE**
SICHTSYSTEM UND VERFAHREN ZUR ABBILDUNG VON ULTRASCHALLDATEN IN EINEN CAD-RAUM
SYSTÈME DE VISION ET PROCÉDÉ DE MAPPAGE DE DONNÉES ULTRASONORES DANS UN ESPACE CAO

(30) Priority: 16.05.2008 US 122119
(43) Date of publication of application: 02.03.2011
(73) Proprietor: Lockheed Martin Corporation, Bethesda, MD 20817 (US)
(72) Inventor: DUBOIS, Marc, Keller TX 76248 (US); DRAKE, Thomas, E., Jr., Fort Worth TX 76110 (US); KAISER, David, L., Fort Worth TX 76133 (US); OSTERKAMP, Mark, A., Weatherford TX 76087 (US)
(74) Representative: Robinson, David Edward Ashdown
(86) International application number: PCT/US2009/043902
(87) International publication number: WO 2009/140465

(56) References cited:
- WO-A1-2008/052348
- US-A1- 2006 219 014
- TURNER W ET AL: "Using computer vision to map laser ultrasound onto CAD geometries" AIP CONFERENCE PROCEEDINGS, no. 657A, 2003, pages 340-347, XP002543201 AIP USA ISSN: 0094-243X

## Description

### BACKGROUND OF THE INVENTION

### Technical Field of the Invention

This invention generally relates to the field of non-destructive techniques for measurement of composite materials. Specifically, the invention relates to a method and system for correlating positional data with ultrasonic data.

### Description of the Prior Art

In recent years, use of composite materials has grown in the aerospace and other commercial industries. Composite materials offer significant improvements in performance, however they are difficult to manufacture and thus require strict quality control procedures during manufacturing. Non-destructive evaluation ("NDE") techniques have been developed as a method for the identification of defects in composite structures, such as, for example, the detection of inclusions, delaminations and porosities. Conventional NDE methods are typically slow, labor-intensive and costly. As a result, the testing procedures adversely increase the manufacturing costs associated with composite structures.

For parts having irregular surfaces, the measurement data is preferably correlated to positional data. For these parts, determination of the shape of the part is key to correlating the measurement to a position on the part. Prior art methods for scanning composite parts having irregular shapes required that the part being scanned be positioned on a table and secured in a known position, thereby providing a starting reference point for the scan. For large and/or irregularly shaped objects, the table or other means required to position a part are expensive and frequently specific for only one part. Turner, et al., "Using Computer Vision to Map Laser Ultrasound onto CAD Geometries", AIP Conf. Proceedings describes a system that uses laser ultrasound as a wide area imaging device.

According to the prior art methods, scanning of complex shaped parts required multiple scans from several different poses or views. These methods, however, had several shortcomings. In taking multiple scans of a part, there is a loss of context for adjacent locations on the part. This can make it difficult to determine if the part has been overscanned or underscanned across a complex shape, or across adjacent parts when scanning an object that is made up of two or more parts. Additionally, the prior techniques resulted in poor localization of the laser ultrasound data on the part. Thus, there exists a need for a method and apparatus to provide laser ultrasound data of composite materials correlated to a position on the part being scanned.

### SUMMARY OF THE INVENTION

An apparatus for correlating laser ultrasound measurement and positional data of 3-dimensional objects, a corresponding method of analysing an article and a method of evaluating aircraft parts in service are defined in claims 1, 5 and 11 respectively.

In one aspect of the invention, a method for correlating laser ultrasound data to positional data of an article is provided. The method includes the steps of: (a) positioning an article for laser ultrasonic evaluation; (b) measuring the dimensions of the article with a structured light system; (c) detecting ultrasonic surface displacements at the surface of the article; (d) correlating dimensions of the article and the ultrasonic surface displacements; (e) comparing the dimensions of the article with a known data set; (f) processing the ultrasonic surface displacement; and (g) correlating the known data set and the processed ultrasonic surface displacements. In certain preferred embodiments, the article is a composite material.

In certain embodiments, the steps for measuring the dimensions of the article include providing a structured light apparatus that includes at least one camera, a light beam producing element and means for moving the apparatus. A light beam is projected onto the surface of the article. The camera is operated to receive the image of the light beam being projected onto the surface of the article. The apparatus is then moved to a next location and scanned again until the entire surface of the article has been measured.

In certain embodiments, the steps for detecting ultrasonic surface displacements at the surface of the article include generating ultrasonic displacements at the surface of the article, generating a detection laser beam, directing the detection laser beam at the surface of the article, scattering the detection laser beam with the ultrasonic surface displacement of the article to produce phase modulated light, processing the phase modulated light to obtain data relating to the ultrasonic surface displacements at the surface; and collecting the data to provide information about the structure of the article.

In another aspect a method of evaluating aircraft parts in service is provided. The method includes the steps of scanning an as-made aircraft part with a structured light system to obtain article 3-dimensional information. A laser beam is directed at a surface of the as-made aircraft part to create ultrasonic surface displacements which are then detected. The 3-dimensional information of the as-made aircraft part is correlated with the ultrasonic surface displacements. The 3-dimensional information of the as-made aircraft part is compared with a known data set. The ultrasonic surface displacement data is processed and correlated to the known data set to provide coordinate measurements for the ultrasonic surface displacement data of the as-made aircraft part. The 3-dimensional information and the ultrasonic surface displacement data of the as-made aircraft part is then stored in computer memory or the like. The as-made aircraft part is installed onto an aircraft. At some later point in time, the installed aircraft part is scanned with a structured light system to obtain article 3-dimensional information. A laser beam is directed at a surface of the installed aircraft part to create ultrasonic surface displacements. The ultrasonic surface displacements are then detected. The 3-dimensional information of the installed aircraft part is correlated with the ultrasonic surface displacements. The ultrasonic surface displacement data is processed and correlated with the known data set and to provide coordinate measurements for the ultrasonic surface displacement data. The 3-dimensional information and processed ultrasonic surface displacement data of the installed aircraft part is compared with the 3-dimensional information and processed ultrasonic surface displacement data of the as-made aircraft part.

In another aspect, an apparatus for correlating laser ultrasound measurement and positional data of 3-dimensional objects is provided. The apparatus includes an articulated robotic arm that includes a structured light system and a laser ultrasound system. The the structured light system includes a light source and light detection means. The laser ultrasound system includes a laser producing ultrasonic vibrations on the surface of an article, means for detecting the ultrasonic vibrations and means for collecting the detection signal. The apparatus also includes a central processing unit and a motion control system, wherein the structured light system is coupled to the articulated robotic arm by a pan and tilt unit.

### BRIEF DESCRIPTION OF THE DRAWINGS

Figure 1 is a schematic illustration of an exemplary embodiment of an apparatus for providing laser ultrasound measurements and 3-dimensional measurements of an article.
Figure 2 provides a logic flow diagram in accordance with one embodiment of the present invention.

### DETAILED DESCRIPTION OF THE INVENTION

In the figures and description that follows, like parts are marked throughout the specification and drawings with the same reference numerals, respectively. The figures are not necessarily to scale. Certain features of the invention may be shown exaggerated in scale or in somewhat schematic form and some details of conventional elements may not be shown in the interest of clarity and conciseness. The present invention is susceptible to embodiments of different forms. Specific embodiments are described in detail and are shown in the figures, with the understanding that the present disclosure is to be considered an exemplification of the principles of the invention, and is not intended to limit the invention to that illustrated and described herein. It is to be fully recognized that the different teachings of the embodiments discussed below may be employed separately or in any suitable combination to produce desired results. The various characteristics mentioned above, as well as other features and characteristics described in more detail below, will be readily apparent to those skilled in the art upon reading the following detailed description of the embodiments, and by referring to the accompanying drawings.

Described herein are a non-contact method and apparatus for determining the shape of a object that includes composite materials, as well as a method for correlating laser ultrasound measurements for the object.

### Structured Light

Structured light is one exemplary non-contact technique for the mapping of 3D composite materials, which involves the projection of a light pattern (for example, a plane, grid, or other more complex shape), at a known angle onto an object. This technique is useful for imaging and acquiring dimensional information.

Typically, with structured light systems, the light pattern is generated by fanning out or scattering a light beam into a sheet of light. When the sheet of light intersects with an object, a bright light can be seen on the surface of the object. By observing the line of light from an angle, typically at a detection angle which is different than the angle of the incident laser light, distortions in the line can be translated into height variations on the object being viewed. Multiple scans of views (frequently referred to as poses) can be combined to provide the shape of the entire object. Scanning an object with light can provide 3-D information about the shape of the object, wherein the 3-D information includes absolute coordinate and shape data for the object. This is sometimes referred to as active triangulation.

Because structured lighting can be used to determine the shape of an object, it can also help to both recognize and locate an object in an environment. These features make structured lighting useful in assembly lines implementing process control or quality control. Objects can be scanned to provide a shape of an article, which can then be compared against archived data. This advantage can allow for further automation of assembly lines, thereby generally decreasing the overall cost.

The beam of light projected onto the object can be observed with a camera or like means. Exemplary light detecting means include a CCD camera, or the like. A variety of different light sources can be used as the scanning source, although a laser is preferable for precision and reliability.

Structured light 3D scanners project a pattern of light on the subject and look at the deformation of the pattern on the subject. The pattern may be one dimensional or two dimensional. An example of a one dimensional pattern is a line. The line is projected onto the subject using either an LCD projector or a sweeping laser. The detection means, such as a camera, looks at the shape of the line and uses a technique similar to triangulation to calculate the distance of every point on the line. In the case of a single-line pattern, the line is swept across the field of view to gather distance information one strip at a time.

One advantage of a structured light 3D scanner is speed. Instead of scanning one point at a time, structured light scanners scan multiple points or the entire field of view at once. This reduces or eliminates the problem of distortion from the scanning motion. Some existing systems are capable of scanning moving objects in real-time.

In certain embodiments, the structured light system detection camera includes a filter designed to pass light corresponding only to a specified wavelength, such as the wavelength of the scanning laser. The detection camera is operable to detect and record the light image, and using various algorithms, determine the coordinate values corresponding to the image. In certain embodiments, the laser and the detection camera view the object from different angles.

The structured light system can also include a second camera, known as a texture camera, which is operable to provide a full image of the object.

Prior art calibration techniques include the use of a series of targets, placed about the tool table at various locations.

In a preferred embodiment, the optimum manner to scan an object or part is determined, including optimizing (i.e., using the fewest) the number of views or "poses" required for each complete scan, thereby minimizing overlap of the scans, and minimizing the need to reconstruct subsequent scans. In certain embodiments, the number of poses can be optimized according to measured data. In certain other embodiments, the minimum number of poses can be determined in view of the CAD data. In yet other embodiments, CAD data can be analyzed prior to scanning the object to determine the minimum the number of scans necessary to scan the entire surface of the object or part.

In certain embodiments, the structured light system provides a series of data points to generate a point cloud corresponding to the shape of the object and the specific view of the object or part being scannned. The point clouds for each view or pose can then be merged to assemble a composite point cloud of the entire object or part. The individual point cloud data can then be transformed into specific cell coordinate systems.

Once the measured poses for each part have been assembled to provide a point cloud for the entire part, and the relative coordinates for the part have been determined, the data set corresponding to the part can then be registered. Registering the data set corresponding to the part provides a full complement of coordinate points for the part, and allows the data to be manipulated in space, thereby allowing the same part to be readily identified in later scans. Once a part has been registered, like parts are more easily identified and confirmed by comparing a subsequent scan against prior scans or confirmed CAD data. The registered scans can be collected to provide a database.

### Laser Ultrasound

Laser ultrasound is a non-destructive evaluation technique for the analysis of solid materials to thereby provide data, such as, the presence of defects, and the like. In particular, because laser ultrasound is a non-destructive, non contact analytical technique, it can be used with delicate samples and samples having complex geometries. Additionally, laser ultrasound can be used to measure properties on large objects.

In laser ultrasound, pulsed laser irradiation causes thermal expansion and contraction on the surface being analyzed, thereby generating stress waves within the material. These waves create displacements on the material surface. Defects are detected when a measurable change in the displacement is recorded.

Laser detection of ultrasound can be performed in a variety of ways, and these techniques are constantly being improved and developed. There is no best method to use in general as it requires knowledge of the problem and an understanding of what the various types of laser detector can do. Commonly used laser detectors fall into two categories, interferometric detection (Fabry Perot, Michelson, time delay, vibrometers and others) and amplitude variation detection such as knife edge detectors.

Laser ultrasound is one exemplary method for inspecting objects made from composite materials. Generally, the method involves producing ultrasonic vibrations on a composite surface by radiating a portion of the composite with a pulsed generation laser. A detection laser beam can be directed at the vibrating surface and scattered, reflected, and phase modulated by the surface vibrations to produce phase modulated light. The phase modulated laser light can be collected by optical means, or the like, and directed it for processing. Processing is typically performed by an interferometer coupled to the collection optics. Information concerning the composite can be ascertained from the phase modulated light processing, including the detection of cracks, delaminations, porosity, foreign materials (inclusions), disbonds, and fiber information.

In certain embodiments, a Mid-IR laser can be employed. Generally, the mid-IR laser provides larger optical penetration depth, improved signal to noise ratio to produce thermoelastic generation without producing thermal damage to the surface being analyzed, and shorter pulses.

One of the advantages of using laser ultrasound for objects with a complex shape, such as components used in the aerospace industry, is that a couplant is unnecessary and the complex shaped can be examined without the need for contour-following robotics. Thus, laser-ultrasound can be used in aerospace manufacturing for inspecting polymer-matrix composite materials. These composite materials may undergo multiple characterization stages during the preparation of the composite materials, one of which is the ultrasonic inspection by laser ultrasound. At some point during manufacturing these composites are preferably chemically characterized to ensure the resins used in forming the composite are properly cured. Additionally, it is important to confirm that the correct resins were used in the forming process. Because it is a non-destructive, non-contact technique, laser ultrasound is a preferable method of analysis. Typically, chemical characterization of composite materials typically involves obtaining control samples for infrared spectroscopy laboratory analysis.

Another of the advantages of employing the present method is the spectroscopic analysis described herein may be performed on the as-manufactured parts, rather than on a sample that has been taken from a particular part and analyzed in a laboratory. Additionally, the spectroscopic analysis techniques described herein can also be employed when the part is affixed to a finished product. In certain embodiments, the present method may be used on a finished product during the period of its useful life, i.e. after having been put into service and while it is affixed to an aircraft or other vehicle. For example, the spectroscopic analysis can occur on an aircraft part during the acceptance testing of the part prior to its assembly on the aircraft. Similarly, after being affixed onto the aircraft, a part can be analyzed using the spectroscopic analysis, prior to acceptance of the aircraft, or after the aircraft has been in service and during the life of the part or of the aircraft.

It should be noted that the present methods are not limited to final products comprising aircraft, but can include any single part or any product that includes two or more parts. Additionally, the laser ultrasonic system can be used to provide spectroscopic analysis of parts or portions of parts in hard to access locations. Not only can the present method determine the composition of a target object, such as a manufactured part, the method can determine if the object forming process has been undertaken correctly. For example, if the part is a composite or includes a resin product, it can be determined if the composite constituents, such as resin, have been properly processed or cured. Additionally, it can also be determined if a particular or desired constituent, such as resin, was used in forming the final product. The analysis can also determine if a coating, such as a painted surface, has been applied to an object, if the proper coating was applied to the surface and if the coating was applied properly.

Accordingly, recorded optical depth data of known composites provides a valid comparison reference to identify a material from measured ultrasonic displacement values and corresponding generation beam wavelength. As noted above, the identification with respect to the material of the part is not limited to the specific material composition, but can also include coatings, if the material had been properly processed, and percentages of compositions within the materials.

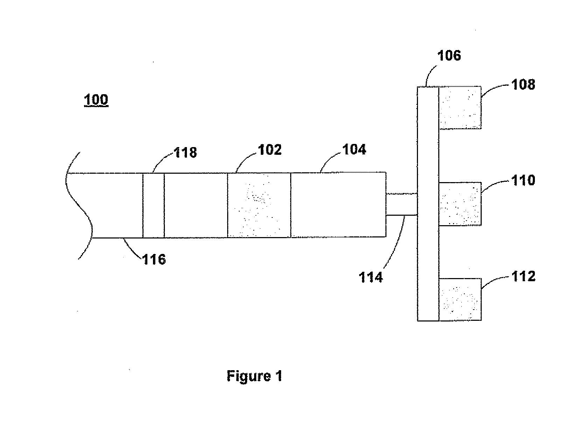

In one aspect, the present invention provides an automated non-destructive technique and apparatus for correlating positional data and spectroscopic data of composite materials. Referring initially to Figure 1, an exemplary embodiment of the structured light - laser ultrasound apparatus 100 is provided. The apparatus 100 includes a laser ultrasound system 102, an analog camera 104 and a structured light system 106. The laser ultrasound system 102 can include a generation laser, a detection laser and optics means configured to collect light from the detection laser. In certain embodiments, the optics means can include an optical scanner, or the like. Exemplary generation lasers and laser detection means are known in the art. The analog camera 104 is a real-time monitor. The structured light system 106 includes a laser 108 for providing the structured light signal, an optional texture camera 110 for providing panoramic images of the object being scanned, and a structured light camera 112. In certain embodiments, the structured light camera 112 can include a filter designed to filter all light other than the laser light generated by the laser 108. The system 100 is coupled to an articulated robotic arm 116 having a rotational axis 118 about the arm. The system 100 also includes a pan and tilt unit 114 coupling the structured light system 105 to the robotic arm 116. The robotic arm 116 preferably includes sensors allowing the system to be aware of the position of the arm and the attached cameras and lasers, thereby providing a self-aware absolute positioning system and eliminating the need for positioning the part being scanned on a referenced tool table. Additionally, the self-aware robotic system is suitable for scanning large objects that may be too large for analysis on a tool table. The system 100 may be coupled to a computer that includes software operable to control the various cameras and to collect the data. In certain embodiments, the system may be a stationary system. In certain other embodiments, the system can be coupled to a linear rail. In certain other embodiments, the system can be mounted to a movable base or to a vehicle. The vehicle can be advantageously used to transport the system to a variety of locations.

In certain embodiments, the articulated robotic arm, and any means for moving the arm, can include means for preventing collision with objects in the general area, such as for example, tables or the like. Collision avoidance can be achieved by a variety of means, including programming the location of all fixed items and objects into the control system for the robotic arm or through the use various sensors. Typically, the robotic arm is locked out from occupying the space that is occupied by the part being scanned.

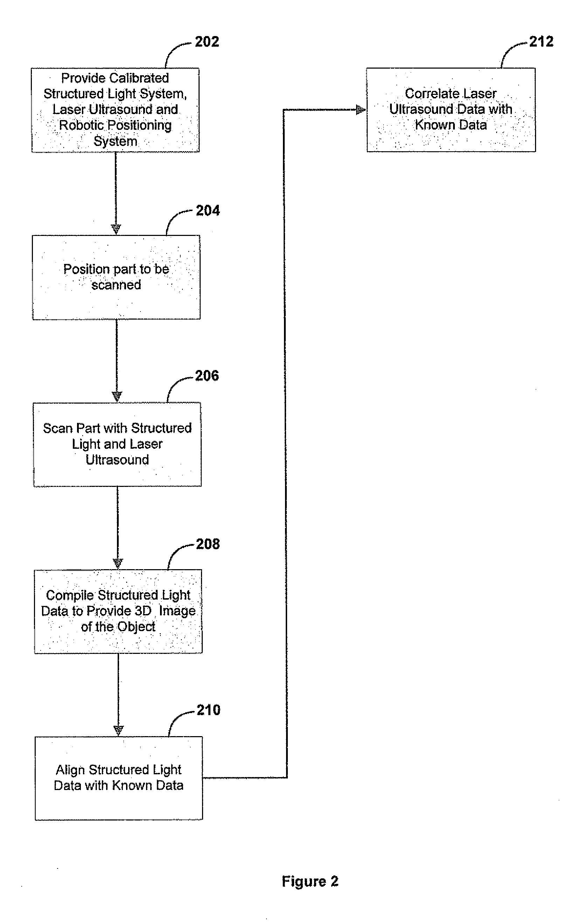

Referring now to Figure 2, the steps for an exemplary method for scanning a part and providing laser ultrasound data corresponding to positional data are provided. In a first step 202, a calibrated structured light system, laser ultrasound and robotic positioning system are provided. In a second step 204, a part is positioned in a predefined location for scanning. Generally, it is not necessary for the part to be positioned in a known location, as was necessary in the prior art, although it is advantageous for the part to be positioned in a defined location. In the third step 206 a part is scanned with a structured light system and the laser ultrasound system simultaneously. In certain embodiments, the structured light system follows a predetermined path to measure the absolute position of the part surface, relative to the structured light system. Typically, the structured light camera includes a filter that filters the light such that only the laser light passes through the filter and is recorded. This can be accomplished by filtering out all wavelengths other than the wavelength produced by the laser. A line detection algorithm determines the coordinates for each individual scan over the object surface. The structured light system data and corresponding laser ultrasound data are recorded. The system is moved and repositioned to take the remaining images of the part to ensure the entire surface of the part being scanned. In a fourth step 208, after the entire surface of the part has been scanned, the structured light data is compiled to provide a 3D view of the object. In the fifth step 210, the structured light data is aligned with a known data set, for example, CAD data or archival structured light scans of a like object. In a sixth step 212, the laser ultrasound data is correlated to the structured light data, and the corresponding known data set, for example, CAD or archival data. In this manner, the laser ultrasound data can be mapped against the structure of the part, and trends in the presence, absence or formation of defects can be determined.

Ultrasonic displacements are created on the target surface in response to the thermo-elastic expansions. The amplitude of the ultrasonic displacement, at certain ultrasonic wavelengths, is directly proportional to the optical penetration depth of the generation laser beam into the target surface. The optical penetration depth is the inverse of the optical absorption of the target. Thus, in another embodiment of the present method, by varying the generation laser beam optical wavelength, an absorption band of the target material can be observed over a wavelength range of the generation beam.

The automated system is advantageous because it is much quicker than the prior art conventional system, which required that each individual part be positioned in a precise manner on a tool table, thereby enabling each part to have an initial reference point. One major disadvantage to the prior art method is that each subsequent part having a like shape was required to be positioned in the exact same manner in order to provide data suitable for comparison, such as a for preparing a database for later comparison and compilation. In certain embodiments, the present system is capable of scanning parts at up to 5 times faster than the prior art methods, and in preferred embodiments, the present system is capable of scanning parts at up to 10 times faster than the prior art methods. Increased rate of data acquisition provides for increased throughput of parts.

The ultrasound data is preferably measured concurrently with the measurement of the structured light data. In certain embodiments, the structured light system is synchronized with the laser ultrasound system. Individual ultrasound data points can then be correlated with coordinates on the part surface, and projected onto a registered coordinate measurement set. In certain embodiments, the ultrasound measurements may overlap at the edges of certain scans. In some instances, the poses for the ultrasound measurements can be designed to overlap in specific areas of the part which are viewed as requiring multiple data points.

As noted previously, advantages to mapping the laser ultrasound data to the CAD data, or to a registered structure, include improved inspection efficiency due to the use of a verified structure and verification that the entire surface of the part is being scanned. Additionally, by correlating the ultrasound data to the coordinate data for the part, archiving of the part data is simplified as is the correlation of a part to be scanned in the future.

Laser ultrasound is useful for measuring other general material characteristics such as porosity, foreign materials, delaminations, porosity, foreign materials (inclusions), disbands, cracks, and fiber characteristics such as fiber orientation and fiber density, part thickness, and bulk mechanical properties. Thus, another advantage of the present method is a laser ultrasound detection system can perform target spectroscopic analysis while at the same time analyzing the bulk material for the presence of defect conditions. In addition to the savings of time and capital, a the present method provides more representative spectroscopic analysis as the analysis is performed on the entire surface of the object itself, rather than corresponding to a test coupon or control sample. As noted above, the scan can be performed on a manufactured part by itself, the part affixed to a larger finished product, or the final finish assembled product as a whole.

In certain embodiments, CAD data may be available for the object being analyzed. In these embodiments, the 3D positional data generated by the structured light system can be compared against and/or overlayed with the CAD data. This can be used as a quality control procedure to verify the manufacturing process. In other embodiments, the structured light data can be overlayed with the CAD data to provide confirmation of the part. Data that is collected with the structured light system can be used to provide a data cloud corresponding to the 3D structure of the object. Based upon calibration techniques used for the system, an absolute data cloud can be produced. The data cloud can then be oriented onto the CAD drawing, thereby providing correlation between the structured light data and the CAD data. The laser ultrasound data, which is preferably collected at the same time as the structured light data, and correlated to individual points on the surface of the object, can then be projected or mapped onto the CAD data to provide absolute coordinate data for the laser ultrasound data.

In certain embodiments, the apparatus can include a second camera, such as a texture camera. The texture camera generally captures full images of the object, and can be used for part recognition purposes. Unlike the structured light camera, the texture camera image is not filtered to remove the object from the image. While the structured light data provides a virtual surface of the part, the texture camera can provide an actual image of the object, which can be used in conjunction with the structured light and laser ultrasound data. In this manner, both the structured light data and the CAD data can be compared with the visual image provided by the texture camera. Additionally, the texture camera can provide a view of the part being scanned to the operator or for archival purposes.

Preferably, the structured light system is calibrated prior to performing the scan of the object. Calibration is necessary to ensure accuracy in the measurement and preparation of the coordinate data relating to the object being scanned. In certain embodiments, the system is calibrated locally, i.e., in relation to the tilt and pivot mechanism, by scanning a object having a known shape with the structured light system.

As understood by one of skill in the art, scanning of parts having complex shapes may require multiple scans. In one embodiment, the scans are conducted such that scans overlap at seams or edges of the part. In another embodiment, the scans are performed to purposely overlap in certain areas of the part.

Registration and comparison of the structured light data, against either CAD data or prior scans of similar or the same part, can help to ensure that 100% of the surface area is scanned with minimal overlap, or with overlap in the critical areas of the part. Additionally, registration allows for features and/or defects to be scanned and compared across multiple parts. This allows problem areas to be analyzed and solutions to be developed for the prevention of future defects. Additionally, storage of the data allows for parts being repaired to be compared with the "as constructed" data set.

For smaller parts having a complex shape, a tooling table can be used which includes pegs and posts to provide the necessary alignment cues for the structured light system. However, use of the tooling table as a base and support for the part being examined requires prior knowledge of the shape of the part, as well as a beginning reference point for the part.

As used herein, the terms about and approximately should be interpreted to include any values which are within 5% of the recited value. Furthermore, recitation of the term about and approximately with respect to a range of values should be interpreted to include both the upper and lower end of the recited range.

While the invention has been shown or described in only some of its embodiments, it should be apparent to those skilled in the art that it is not so limited, but is susceptible to various changes without departing from the scope of the invention.

## Claims

1. An apparatus for correlating laser ultrasound measurement and positional data of 3-dimensional objects, comprising:
an articulated robotic arm (116), said arm comprising:
a structured light system (106), the structured light system comprising a light source (108) and light detection means (112);
a laser ultrasound system (102), the laser ultrasound system comprising a laser producing ultrasonic vibrations on the surface of an article, means for detecting the ultrasonic vibrations and means for collecting the detection signal;
a central processing unit; and
a motion control system;
wherein the structured light system is coupled to the articulated robotic arm by a pan and
tilt unit (114), and
wherein the central processing unit is configured to process the structured light measurements and provide 3-dimensional information relating to the article,
**characterised in that** the apparatus is configured to analyze an article by:
scanning (206) the article with the structured light system to obtain article 3-dimensional information;
directing (206) the laser at a surface of the article to create ultrasonic surface displacements;
detecting the ultrasonic surface displacements;
correlating (208) article 3-dimension information with the ultrasonic surface displacements;
comparing (210) article 3-dimensional information with a known data set, wherein the known data set comprises archival structured light scans of a second article that is like the article that is being scanned;
processing the ultrasonic surface displacement data; and
correlating (212) the known data set and the processed ultrasonic surface displacements to provide coordinate measurements for the ultrasonic surface displacement data.

2. The apparatus of claim 1 wherein the structured light system light detection means comprises a charge coupled device.

3. The apparatus of claim 1 or claim 2 wherein the laser ultrasound system is mounted on the articulated robot arm and the robot arm has a rotational axis about the arm.

4. The apparatus of any preceding claim wherein the central processing unit is configured to correlate the article 3-dimensional information and the ultrasonic vibrations on the surface of the article

5. A method of analyzing an article with an apparatus according to any one of claims 1 to 4, the method comprising the steps of:
scanning (206) the article with the structured light system to obtain article 3-dimensional information;
directing (206) the laser at a surface of the article to create ultrasonic surface displacements;
detecting the ultrasonic surface displacements;
correlating (208) article 3-dimension information with the ultrasonic surface displacements;
comparing (210) article 3-dimensional information with a known data set, wherein the known data set comprises archival structured light scans of a second article that is like the article that is being scanned;
processing the ultrasonic surface displacement data; and
correlating (212) the known data set and the processed ultrasonic surface displacements to provide coordinate measurements for the ultrasonic surface displacement data.

6. The method of claim 5 further comprising computing from the 3-dimensional information a minimum number of scans of the ultrasound system necessary to scan an entire surface of the article.

7. The method of claim 5 or claim 6 wherein scanning the article with a structured light system comprises:
providing an structured light apparatus comprising at least one camera, a light beam producing element and means for moving structured light apparatus;
projecting a light beam onto the surface of the article;
operating the camera to receive the image of the light beam being projected onto the surface of the article; and
moving the structured light apparatus to a next location until the entire surface of the article has been measured

8. The method of any one of claims 5 to 7 wherein the steps for detecting ultrasonic surface displacements at the surface of the article comprise:
generating ultrasonic displacements at the surface of the article;
generating a detection laser beam;
directing the detection laser beam at the surface of the article;
scattering the detection laser beam with the ultrasonic surface displacement of the article to produce phase modulated light;
processing the phase modulated light to obtain data relating to the ultrasonic surface displacements at the surface; and
collecting the data to provide information about the structure of the article.

9. The method of any one of claims 5 to 8 wherein the step of correlating the known data set and the processed ultrasonic surface displacements further comprises determining trends in the presence, absence or formation of defects.

10. The method of any one of claims 5 to 9 wherein the step of comparing the article 3-dimensional information with the known data set further comprises mapping the 3-dimensional information onto CAD data of the article.

11. A method of evaluating aircraft parts in service, the method comprising:
with a first apparatus according to any one of claims 1 to 4,
scanning an as-made aircraft part with the structured light system to obtain article 3-dimensional information;
directing a laser beam at a surface of the as-made aircraft part to create ultrasonic surface displacements;
detecting the ultrasonic surface displacements;
correlating the as-made aircraft part 3-dimensional information with the ultrasonic surface displacements;
comparing the as-made aircraft part 3-dimensional information with a known data set;
processing the ultrasonic surface displacement data;
correlating the known data set and the processed ultrasonic surface displacements to provide coordinate measurements for the ultrasonic surface displacement data of the as-made aircraft part;
storing the as-made aircraft part 3-dimensional information and the ultrasonic surface displacement data;
installing the as-made aircraft part onto an aircraft; and
with a second apparatus according to any one of claims 1 to 4,
scanning the installed aircraft part with a structured light system to obtain article 3-dimensional information;
directing a laser beam at a surface of the installed aircraft part to create ultrasonic surface displacements;
detecting the ultrasonic surface displacements;
correlating the installed aircraft part 3-dimensional information with the ultrasonic surface displacements;
processing the ultrasonic surface displacement data;
correlating the known data set and the processed ultrasonic surface displacements to provide coordinate measurements for the ultrasonic surface displacement data; and
comparing the installed aircraft part 3-dimensional information and processed ultrasonic surface displacement data and the as-made aircraft part 3-dimensional information and processed ultrasonic surface displacement data.

12. The method of claim 11 wherein the evaluation of the aircraft part includes the identification of a defect selected from the group consisting of delamination, cracks, inclusions, disbands, and combinations thereof.

## Patentansprüche

1. Vorrichtung zum Korrelieren von Laserultraschallmesswerten und Positionsdaten von dreidimensionalen Objekten, umfassend:
einen gelenkigen Roboterarm (116), wobei der Arm umfasst:
ein Streifenlichtsystem (106), wobei das Streifenlichtsystem eine Lichtquelle (108) und ein Lichtermittlungsmittel (112) umfasst;
ein Laserultraschallsystem (102), wobei das Laserultraschallsystem einen Laser, der Ultraschallschwingungen auf der Oberfläche eines Gegenstandes erzeugt, ein Mittel zum Ermitteln der Ultraschallschwingungen und ein Mittel zum Erfassen des Ermittlungssignals umfasst;
eine zentrale Verarbeitungseinheit; und
ein Bewegungssteuerungssystem;
worin das Streifenlichtsystem mittels einer Schwenk- und Neigeeinheit (114) mit dem gelenkigen Roboterarm gekoppelt ist, und
worin die zentrale Verarbeitungseinheit dafür konfiguriert ist, die Streifenlichtmesswerte zu verarbeiten und dreidimensionale Information bezüglich des Gegenstandes bereitzustellen,
**dadurch gekennzeichnet, dass** die Vorrichtung dafür konfiguriert ist, einen Gegenstand durch Folgendes zu analysieren:
Abtasten (206) des Gegenstandes mit dem Streifenlichtsystem, um dreidimensionale Gegenstandsinformation zu erlangen;
Richten (206) des Lasers auf eine Oberfläche des Gegenstandes, um Ultraschall-Oberflächenversetzungen zu erzeugen;
Ermitteln der Ultraschall-Oberflächenversetzungen;
Korrelieren (208) von dreidimensionaler Gegenstandsinformation mit den Ultraschall-Oberflächenversetzungen;
Vergleichen (210) von dreidimensionaler Gegenstandsinformation mit einem bekannten Datensatz, worin der bekannte Datensatz archivierte Streifenlichtabtastungen eines zweiten Gegenstandes umfasst, der gleich dem Gegenstand ist, welcher abgetastet wird;
Verarbeiten der Ultraschall-Oberflächenversetzungsdaten; und
Korrelieren (212) des bekannten Datensatzes und der verarbeiteten Ultraschall-Oberflächenversetzungen, um Koordinatenmesswerte für die Ultraschall-Oberflächenversetzungsdaten bereitzustellen.

2. Vorrichtung nach Anspruch 1, worin das Lichtermittlungsmittel des Streifenlichtsystems ein ladungsgekoppeltes Bauelement umfasst.

3. Vorrichtung nach Anspruch 1 oder Anspruch 2, worin das Laserultraschallsystem am gelenkigen Roboterarm montiert ist und der Roboterarm eine Rotationsachse um den Arm hat.

4. Vorrichtung nach einem der vorhergehenden Ansprüche, worin die zentrale Verarbeitungseinheit dafür konfiguriert ist, die dreidimensionale Gegenstandsinformation und die Ultraschallschwingungen auf der Oberfläche des Gegenstandes zu korrelieren.

5. Verfahren zum Analysieren eines Gegenstandes mit einer Vorrichtung nach einem der Ansprüche 1 bis 4, wobei das Verfahren die Schritte umfasst:
Abtasten (206) des Gegenstandes mit dem Streifenlichtsystem, um dreidimensionale Gegenstandsinformation zu erlangen;
Richten (206) des Lasers auf eine Oberfläche des Gegenstandes, um Ultraschall-Oberflächenversetzungen zu erzeugen;
Ermitteln der Ultraschall-Oberflächenversetzungen;
Korrelieren (208) von dreidimensionaler Gegenstandsinformation mit den Ultraschall-Oberflächenversetzungen;
Vergleichen (210) von dreidimensionaler Gegenstandsinformation mit einem bekannten Datensatz, worin der bekannte Datensatz archivierte Streifenlichtabtastungen eines zweiten Gegenstandes umfasst, der gleich dem Gegenstand ist, welcher abgetastet wird;
Verarbeiten der Ultraschall-Oberflächenversetzungsdaten; und
Korrelieren (212) des bekannten Datensatzes und der verarbeiteten Ultraschall-Oberflächenversetzungen, um Koordinatenmesswerte für die Ultraschall-Oberflächenversetzungsdaten bereitzustellen.

6. Verfahren nach Anspruch 5, ferner umfassend: Berechnen einer Mindestanzahl von Abtastungen des Ultraschallsystems, die notwendig ist, um eine ganze Oberfläche des Gegenstandes abzutasten, aus der dreidimensionalen Information.

7. Verfahren nach Anspruch 5 oder Anspruch 6, worin das Abtasten des Gegenstandes mit einem Streifenlichtsystem umfasst:
Bereitstellen einer Streifenlichtvorrichtung, die mindestens eine Kamera, ein Lichtstrahlen erzeugendes Element und Mittel zum Bewegen der Streifenlichtvorrichtung umfasst;
Projizieren eines Lichtstrahls auf die Oberfläche des Gegenstandes;
Betreiben der Kamera, um das Bild des Lichtstrahls zu empfangen, der auf die Oberfläche des Gegenstandes projiziert wird; und
Bewegen der Streifenlichtvorrichtung zu einem nächsten Ort, bis die ganze Oberfläche des Gegenstandes abgetastet worden ist.

8. Verfahren nach einem der Ansprüche 5 bis 7, worin die Schritte zum Ermitteln von Ultraschall-Oberflächenversetzungen auf der Oberfläche des Gegenstandes umfassen:
Erzeugen von Ultraschall-Oberflächenversetzungen auf der Oberfläche des Gegenstandes;
Erzeugen eines Ermittlungs-Laserstrahls;
Richten des Ermittlungs-Laserstrahls auf die Oberfläche des Gegenstandes;
Streuen des Ermittlungs-Laserstrahls mit der Ultraschall-Oberflächenversetzung des Gegenstandes, um phasenmoduliertes Licht zu erzeugen;
Verarbeiten des phasenmodulierten Lichts, um Daten bezüglich der Ultraschall-Oberflächenversetzungen auf der Oberfläche zu erlangen; und
Erfassen der Daten, um Information über die Struktur des Gegenstandes bereitzustellen.

9. Verfahren nach einem der Ansprüche 5 bis 8, worin der Schritt des Korrelierens des bekannten Datensatzes und der verarbeiteten Ultraschall-Oberflächenversetzungen ferner umfasst: Bestimmen von Trends beim Vorliegen, Fehlen oder Ausbilden von Defekten.

10. Verfahren nach einem der Ansprüche 5 bis 9, worin der Schritt des Vergleichens der dreidimensionalen Gegenstandsinformation mit dem bekannten Datensatz ferner umfasst: Zuordnen der dreidimensionalen Information zu CAD-Daten des Artikels.

11. Verfahren zum Bewerten von Luftfahrzeugteilen im Betrieb, wobei das Verfahren umfasst:
mit einer ersten Vorrichtung nach einem der Ansprüche 1 bis 4 erfolgendes:
Abtasten eines neu produzierten Luftfahrzeugteils mit dem Streifenlichtsystem, um dreidimensionale Gegenstandsinformation zu erlangen;
Richten eines Laserstrahls auf eine Oberfläche des neu produzierten Luftfahrzeugteils, um Ultraschall-Oberflächenversetzungen zu erzeugen;
Ermitteln der Ultraschall-Oberflächenversetzungen;
Korrelieren von dreidimensionaler Information des neu produzierten Luftfahrzeugteils mit den Ultraschall-Oberflächenversetzungen;
Vergleichen der dreidimensionalen Information des neu produzierten Luftfahrzeugteils mit einem bekannten Datensatz;
Verarbeiten der Ultraschall-Oberflächenversetzungsdaten;
Korrelieren des bekannten Datensatzes und der verarbeiteten Ultraschall-Oberflächenversetzungen, um Koordinatenmesswerte für die Ultraschall-Oberflächenversetzungsdaten des neu produzierten Luftfahrzeugteils bereitzustellen;
Speichern der dreidimensionalen Information des neu produzierten Luftfahrzeugteils und der Ultraschall-Oberflächenversetzungsdaten;
Installieren des neu produzierten Luftfahrzeugteils an einem Luftfahrzeug; und
mit einer zweiten Vorrichtung nach einem der Ansprüche 1 bis 4 erfolgendes:
Abtasten des installierten Luftfahrzeugteils mit einem Streifenlichtsystem, um dreidimensionale Gegenstandsinformation zu erlangen;
Richten eines Laserstrahls auf eine Oberfläche des installierten Luftfahrzeugteils, um Ultraschall-Oberflächenversetzungen zu erzeugen;
Ermitteln der Ultraschall-Oberflächenversetzungen;
Korrelieren von dreidimensionaler Information des installierten Luftfahrzeugteils mit den Ultraschall-Oberflächenversetzungen;
Verarbeiten der Ultraschall-Oberflächenversetzungsdaten;
Korrelieren des bekannten Datensatzes und der verarbeiteten Ultraschall-Oberflächenversetzungen, um Koordinatenmesswerte für die Ultraschall-Oberflächenversetzungsdaten bereitzustellen; und
Vergleichen der dreidimensionalen Information des installierten Luftfahrzeugteils und verarbeiteter Ultraschall-Oberflächenversetzungsdaten mit der dreidimensionalen Information des neu produzierten Luftfahrzeugteils und verarbeiteter Ultraschall-Oberflächenversetzungsdaten.

12. Verfahren nach Anspruch 11, worin die Bewertung des Luftfahrzeugteils die Identifizierung eines Defekts einschließt, der aus der Gruppe ausgewählt wird, die aus Folgendem besteht: Schichtspaltung, Risse, Einschlüsse, Auflösungen und Kombinationen daraus.

## Revendications

1. Appareil pour corréler une mesure ultrasonore laser et des données de position d'objets tridimensionnels, comprenant :
un bras de robot articulé (116), ledit bras comprenant :
un système de lumière structurée (106), le système de lumière structurée comprenant une source de lumière (108) et un moyen de détection de lumière (112) ;
un système ultrasonore laser (102), le système ultrasonore laser comprenant un laser produisant des vibrations ultrasonores sur la surface d'un élément, un moyen pour détecter les vibrations ultrasonores et un moyen pour collecter le signal de détection ;
une unité centrale de traitement ; et
un système de commande de déplacement ;
dans lequel le système de lumière structurée est accouplé au bras de robot articulé par une unité panoramique horizontal-vertical (114), et
dans lequel l'unité centrale de traitement est configurée pour traiter les mesures de lumière structurée et fournir des informations tridimensionnelles concernant l'élément,
**caractérisé en ce que** l'appareil est configuré pour analyser un élément en :
balayant (206) l'élément avec le système de lumière structurée pour obtenir des informations tridimensionnelles d'élément ;
dirigeant (206) le laser vers une surface de l'élément pour créer des déplacements de surface ultrasonores ;
détectant les déplacements de surface ultrasonores ;
corrélant (208) les informations tridimensionnelles d'élément avec les déplacements de surface ultrasonores ;
comparant (210) les informations tridimensionnelles d'élément avec un ensemble de données connu, dans lequel l'ensemble de données connu comprend des balayages de lumière structurée d'archive d'un deuxième élément qui est similaire à l'élément qui est balayé;
traitant les données de déplacements de surface ultrasonores ; et
corrélant (212) l'ensemble de données connu et les déplacements de surface ultrasonores traités pour fournir des mesures de coordonnées pour les données de déplacements de surface ultrasonores.

2. Appareil selon la revendication 1, dans lequel le moyen de détection de lumière du système de lumière structurée comprend un dispositif à couplage de charges.

3. Appareil selon la revendication 1 ou la revendication 2, dans lequel le système ultrasonore laser est monté sur le bras de robot articulé et le bras de robot a un axe de rotation autour du bras.

4. Appareil selon l'une quelconque des revendications précédentes, dans lequel l'unité centrale de traitement est configurée pour corréler les informations tridimensionnelles d'élément et les vibrations ultrasonores sur la surface de l'élément.

5. Procédé d'analyse d'un élément avec un appareil selon l'une quelconque des revendications 1 à 4, le procédé comprenant les étapes :
de balayage (206) de l'élément avec le système de lumière structurée pour obtenir des informations tridimensionnelles d'élément ;
d'orientation (206) du laser vers une surface de l'élément pour créer des déplacements de surface ultrasonores ;
de détection des déplacements de surface ultrasonores ;
de corrélation (208) des informations tridimensionnelles d'élément avec les déplacements de surface ultrasonores ;
de comparaison (210) des informations tridimensionnelles d'élément avec un ensemble de données connu, dans lequel l'ensemble de données connu comprend des balayages de lumière structurée d'archive d'un deuxième élément qui est similaire à l'élément qui est balayé ;
de traitement des données de déplacements de surface ultrasonores ; et
de corrélation (212) de l'ensemble de données connu et des déplacements de surface ultrasonores traités pour fournir des mesures de coordonnées pour les données de déplacements de surface ultrasonores.

6. Procédé selon la revendication 5, comprenant en outre le calcul, à partir des informations tridimensionnelles, d'un nombre minimum de balayages du système ultrasonore nécessaire pour balayer une surface entière de l'élément.

7. Procédé selon la revendication 5 ou la revendication 6, dans lequel le balayage de l'élément avec un système de lumière structurée comprend :
la fourniture d'un appareil de lumière structurée comprenant au moins une caméra, un élément de production de faisceau de lumière et des moyens pour déplacer l'appareil de lumière structurée ;
la projection d'un faisceau de lumière sur la surface de l'élément ;
la mise en oeuvre de la caméra pour recevoir l'image du faisceau de lumière qui est projeté sur la surface de l'élément ; et
le déplacement de l'appareil de lumière structurée vers un emplacement suivant jusqu'à ce que la surface entière de l'élément ait été mesurée.

8. Procédé selon l'une quelconque des revendications 5 à 7, dans lequel les étapes pour détecter des déplacements de surface ultrasonores sur la surface de l'élément comprennent :
la génération de déplacements ultrasonores sur la surface de l'élément ;
la génération d'un faisceau laser de détection ;
l'orientation du faisceau laser de détection vers la surface de l'élément ;
la dispersion du faisceau laser de détection par le déplacement de surface ultrasonore de l'élément pour produire une lumière modulée en phase ;
le traitement de la lumière modulée en phase pour obtenir des données concernant les déplacements de surface ultrasonores sur la surface ; et
la collecte des données pour fournir des informations concernant la structure de l'élément.

9. Procédé selon l'une quelconque des revendications 5 à 8, dans lequel l'étape de corrélation de l'ensemble de données connu et des déplacements de surface ultrasonores traités comprend en outre la détermination de tendances lors de la présence, l'absence ou la formation de défauts.

10. Procédé selon l'une quelconque des revendications 5 à 9, dans lequel l'étape de comparaison des informations tridimensionnelles d'élément avec l'ensemble de données connu comprend en outre le mappage des informations tridimensionnelles sur les données de CAO de l'élément.

11. Procédé d'évaluation de parties d'aéronef en service, le procédé comprenant :
avec un premier appareil selon l'une quelconque des revendications 1 à 4,
le balayage d'une partie d'aéronef nouvellement réalisée par le système de lumière structurée pour obtenir des informations tridimensionnelles d'élément ;
l'orientation d'un faisceau laser vers une surface de la partie d'aéronef nouvellement réalisée pour créer des déplacements de surface ultrasonores ;
la détection des déplacements de surface ultrasonores ;
la corrélation des informations tridimensionnelles de la partie d'aéronef nouvellement réalisée avec les déplacements de surface ultrasonores ;
la comparaison des informations tridimensionnelles de la partie d'aéronef nouvellement réalisée avec un ensemble de données connu ;
le traitement des données de déplacements de surface ultrasonores ;
la corrélation de l'ensemble de données connu et des déplacements de surface ultrasonores traités pour fournir des mesures de coordonnées pour les données de déplacements de surface ultrasonores de la partie d'aéronef nouvellement réalisée ;
la mémorisation des informations tridimensionnelles de la partie d'aéronef nouvellement réalisée et des données de déplacements de surface ultrasonores ;
l'installation de la partie d'aéronef nouvellement réalisée sur un aéronef; et
avec un deuxième appareil selon l'une quelconque des revendications 1 à 4,
le balayage de la partie d'aéronef installée avec un système de lumière structurée pour obtenir des informations tridimensionnelles d'élément ;
l'orientation d'un faisceau laser vers une surface de la partie d'aéronef installée pour créer des déplacements de surface ultrasonores ;
la détection des déplacements de surface ultrasonores ;
la corrélation des informations tridimensionnelles de la partie d'aéronef installée avec les déplacements de surface ultrasonores ;
le traitement des données de déplacements de surface ultrasonores ;
la corrélation de l'ensemble de données connu et des déplacements de surface ultrasonores traités pour fournir des mesures de coordonnées pour les données de déplacements de surface ultrasonores ; et
la comparaison des informations tridimensionnelles de la partie d'aéronef installée et des données de déplacements de surface ultrasonores traitées et des informations tridimensionnelles de la partie d'aéronef nouvellement réalisée et des données de déplacements de surface ultrasonores traitées.

12. Procédé selon la revendication 11, dans lequel l'évaluation de la partie d'aéronef comprend l'identification d'un défaut sélectionné dans le groupe consistant en une délamination, des fissures, des inclusions, des démantèlements, et des combinaisons de ceux-ci.
